(19) Europäisches Patentamt
European Patent Office
Office européen des brevets

(11) Veröffentlichungsnummer: **0 329 187 B1**

(12) **EUROPÄISCHE PATENTSCHRIFT**

(45) Veröffentlichungstag der Patentschrift: **12.07.95**

(51) Int. Cl.⁶: **C08G 18/00**, C08G 18/30, C08G 18/38, C08K 3/34

(21) Anmeldenummer: **89102812.8**

(22) Anmeldetag: **17.02.89**

Die Akte enthält technische Angaben, die nach dem Eingang der Anmeldung eingereicht wurden und die nicht in dieser Patentschrift enthalten sind.

# (54) Verfahren zur Herstellung von Organomineralprodukten.

(30) Priorität: **18.02.88 DE 3805116**

(43) Veröffentlichungstag der Anmeldung:
**23.08.89 Patentblatt 89/34**

(45) Bekanntmachung des Hinweises auf die Patenterteilung:
**12.07.95 Patentblatt 95/28**

(84) Benannte Vertragsstaaten:
**AT BE CH DE ES FR GB GR IT LI LU NL SE**

(56) Entgegenhaltungen:
**EP-A- 167 002**
**EP-A- 0 193 791**
**FR-A- 2 322 184**
**US-A- 4 377 646**

(73) Patentinhaber: **Hilterhaus, Karl-Heinz**
**Schnellweg 21**
**D-49324 Melle (DE)**

(72) Erfinder: **Hilterhaus, Karl-Heinz**
**Schnellweg 21**
**D-49324 Melle (DE)**

(74) Vertreter: **Andrae, Steffen, Dr. et al**
**Patentanwälte**
**Andrae, Flach, Haug, Kneissl**
**Balanstrasse 55**
**D-81541 München (DE)**

EP 0 329 187 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Organomineralprodukten, die insbesondere als Gebirgsverfestigungsmittel für Kohle, Gestein und/oder Erz im Berg- oder Tunnelbau geeignet sind, weshalb das Verfahren auch vorzugsweise als Verfahren zur Gebirgsverfestigung durchgeführt wird, bei dem die Organomineralprodukte direkt in situ in einer zu verfestigenden Gebirgsformation hergestellt werden. Weiterhin kann nach dem Verfahren das Material in künstliche Formation wie z. B. Fundamente, Mauern von Wasserstauanlagen oder bei Gas- und Erdölbohrungen zur Stabilisierung und/oder Abdichtung gegen Wasser und Gas eingesetzt werden.

Als Organomineralprodukte werden im Rahmen der vorliegenden Erfindung mehr oder weniger homogene Substanzen bezeichnet, die aus einer einzigen Reaktionsmischung erzeugt werden und gleichzeitig organische und anorganische Bestandteile enthalten, vorzugsweise in Form ineinandergreifender Netzwerke von organischen Polymerisaten und anorganischen Silikaten, in die ggf. noch weitere organische und/oder anorganische Bestandteile eingelagert sein können. Bestimmte derartige Organomineralprodukte sind dabei bereits aus einer Reihe von Veröffentlichungen des Standes der Technik bekannt, wobei insbesondere hingewiesen werden soll auf FR-A-1 362 003, GB-A-1 186 771, DE-A-2 325 090, DE-A-2 460 834, DE-A-3 421 086, US-A-4 042 536 sowie EP-A-0 000 580.

In allen beschriebenen Fällen werden die Organomineralprodukte aus Reaktionsmischungen hergestellt, die ein Polyisocyanat und eine wäßrige Alkalisilikatlösung ("Wasserglaslösung") aufweisen. Zusätzlich werden Modifikatoren, Katalysatoren, Stabilisatoren und verschiedene Treibmittel verwendet, um jeweils besondere Eigenschaften zu erzielen. Zur Erzielung möglichst homogener Eigenschaften wird der Löslichkeit bzw. Solvatisierbarkeit der eingesetzten organischen Verbindungen durch Wasser zur Erzeugung feinteiliger Emulsionen besondere Aufmerksamkeit geschenkt. Die offenbarten Anwendungszwecke der beschriebenen Organomineralprodukte reichen von Formmassen und Isolierschäumen über Kitte und Klebemassen bis zu Bodenverbesserern und Gebirgsverfestigungsmitteln.

Da im Rahmen der vorliegenden Erfindung einer der Hauptanwendungszwecke des erfindungsgemäßen Verfahrens die Gebirgsverfestigung darstellt, erscheint es ferner angebracht, die technische Entwicklung auf diesem Fachgebiet in den letzten Jahren einleitend zusammenfassend darzustellen. Mit dem Begriff "Gebirgsverfestigung" werden dabei jegliche Verfahren zum Verfestigen und Abdichten von geologischen und geschütteten Gesteins-, Erd- und Kohleformationen verstanden, wobei das Hauptgewicht auf der Gebirgsverfestigung unter Tage in Bergwerken oder im Tiefbau liegt. Derartige Verfahren sind an sich bekannt, und hinsichtlich der praktischen Durchführung ähnelt auch das erfindungsgemäße Verfahren den bereits bekannten Gebirgsverfestigungsverfahren, so daß der nachfolgend zitierte Stand der Technik bezüglich der Möglichkeiten der Verfahrensdurchführung zur Ergänzung der vorliegenden Offenbarung hinzuzuziehen ist.

Die Gebirgsverfestigung stellt einen Sonderfall der chemischen Bodenverfestigung dar, wobei durch Injektion von geeigneten flüssigen Chemikalien Gerölle, Fels, Kohle- und Erzlager verfestigt oder gegen stehendes und fließendes Wasser oder Sole abgedichtet werden. Die ersten derartigen Verfahren wurden bereits gegen Ende des 19. Jahrhunderts beschrieben. Damals kamen insbesondere Wassergläser in Verbindung mit Härtern zum Einsatz. Die Härtung der Wassergläser erfolgt auf verschiedene Weise. So verwendete H. Joosten um 1925 Wasserglas und in einer nachfolgenden Injektion Calciumchlorid als Härterkomponente. Das Verfahren wurde zum "Monosolverfahren" weiterentwickelt, bei dem man sich einer einzigen Injektion aus stark verdünntem Wasserglas und Natriumaluminat bediente. Bei einem anderen, dem sog. "Monodurverfahren", bediente man sich einer Emulsion von Wasserglas und einer organischen Säure als Härterkomponente.

Um die Mitte dieses Jahrhunderts begann man, die Eignung von Kunstharzen zum Zwecke der Gebirgsverfestigung zu untersuchen, und zwar zuerst im amerikanischen Steinkohlebergbau. Seitdem wurden Versuche mit Injektionen von härtbaren Kunststoffen auf der Basis von Polyestern, Polyacrylaten, Epoxiden und Polyurethanen durchgeführt.

So wurden beispielsweise im Jahre 1959 Injektionen von Epoxidharz mit Füllstoffen durchgeführt. Weitere derartige Verfahren, die unter Verwendung von Kunstharzen auf rein organischer Basis, und zwar insbesondere auf der Basis von Polyurethanen durchgeführt wurden, sind ferner in den deutschen Patenten 17 58 185 sowie 31 39 395 beschrieben.

Gleich mit Beginn der Entwicklung von Organomineralprodukten erkannte man auch die prinzipielle Eignung derartiger Produkte zur Boden- bzw. Gebirgsverfestigung. Ein frühes derartiges Verfahren ist in der deutschen Patentschrift 10 69 878 aus dem Jahre 1957 beschrieben, wo man zur Bodenverfestigung Emulsionen aus Wasserglas und polymerisierbaren ungesättigten Estern injiziert. In der GB-A-1 186 771 wird die Eignung von Mischungen aus Wasserglas und Polyisocyanat zum Abdichten von Gebirgsformationen im Bergbau erwähnt. In der DE-A-2 908 746 bzw. der parallelen EP-A-0 016 262 wird nochmals die Verwendung derartiger Mischungen aus Wasserglaslösungen und Polyisocyanaten zur Gebirgsverfestigung und -abdichtung offenbart, wobei jedoch gelehrt wird, daß erst der Zusatz von Polyolen zu derartigen Mischungen zu einer wirklichen Verfestigung führt, bei der standfeste Formationen erhalten werden.

In der DE-A-3 421 085 wird beschrieben, daß Mischungen aus Polyisocyanaten und wäßrigen Alkalisilikatlösungen bei der Gebirgsverfestigung dann vorteilhaft verbessert werden können, wenn eine bestimmte Menge eines Trimerisierungskatalysators für das Polyisocyanat zugesetzt wird, der zum Aufbau eines organischen Netzwerks rein auf der Basis trimerisierter Polyisocyanate führt.

Alle bisher bekannten Gebirgsverfestigungsverfahren weisen jedoch bestimmte Nachteile auf, die ihre Anwendbarkeit und Zuverlässigkeit einschränken. Bei den ersten Injektionsverfahren zur Boden- und Gebirgsverfestigung unter Verwendung rein anorganischer Materialien wurden nur unbefriedigende Verfestigungen erhalten. Das lag wohl in erster Linie an dem ungünstigen Verhältnis von Viskosität zu Feststoffgehalt bei den damals verwendeten Wassergläsern sowie daran, daß die Geschwindigkeit und das Ausmaß der Härtungsreaktion nur mangelhaft gesteuert werden konnten.Die Einflüsse von Temperatur, Porigkeit und Klüftigkeit der Boden- oder Gebirgsformation sowie das Vorkommen von stehendem und fließendem Wasser beeinflußten die Ergebnisse so, daß die erhaltenen Wirkungen nicht den beabsichtigten Ergebnissen entsprachen.

Bei den Versuchen einer rein anorganischen Gebirgsverfestigung zeigten sich eine Reihe von unerwünschten Nebeneffekten, wie mangelnde Festigkeit der Formationen durch stark wasserhaltige Gele, Sprödigkeit durch unvollständige oder übervernetzende Aushärtungsreaktion, Auslaufen des Injektionsgutes in größere Hohlraumbereiche oder ein Wegschwemmen durch unterirdische wasserführende Schichten.

Eine Injektion in einem Winkel über der Horizontalen durch Bohrlöcher konnte überhaupt nicht durchgeführt werden. Die verwendeten Wasserglashärter, wie beispielsweise Formamid und Glyoxal, die in großen Mengen in die Erdformation eingebracht wurden, sind heute als umweltbedenklich einzustufen.

Ähnliche Bedenken sprechen auch gegen zahlreiche Injektionsmaterialien auf Kunststoffbasis, die schädliche Substanzen enthalten oder freisetzen. Beispielhaft seien genannt: Phenole, Formaldehyd, organische Lösungsmittel und wasserlösliche Schaumbildner sowie Chlorfluorkohlenwasserstoffe. Aus der großen Anzahl denkbarer Kunststoffzubereitungen für die Gebirgsverfestigung und/oder Abdichtung durch Injektion haben daher nur wenige praktische Bedeutung erlangt. Zu diesen zählen in erster Linie Polyurethan-Kunstharze, wie sie in den deutschen Patenten 17 58 185 und 31 39 395 beschrieben werden.

Dabei wurden, auch aus Gründen der Materialersparnis, bevorzugt solche Rezepturen eingesetzt, die unter den gegebenen Vorortbedingungen aufschäumen. Als Vorteil aufschäumender Rezepturen wird dabei insbesondere angegeben, daß der beim Aufschäumen auftretende Blähdruck eine Selbstinjektion des Injektionsgutes bewirken kann, was es ermöglicht, mit niedrigerem Injektionsdruck zu arbeiten bzw. das Injektionsgut einfach in Bohrlöcher einzufüllen, die nach außen abgedichtet werden. Es war jedoch bereits erkannt worden, daß es an sich ein Nachteil ist, daß durch das Aufschäumen die Festigkeit des ausgehärteten Kunstharzes vermindert wird.

Trotz der weit verbreiteten Anwendung von schäumenden Rezepturen müssen jedoch Schäume als zumindestens ungünstig, wenn nicht sogar gefährlich angesehen werden. Der Blähdruck kann nämlich nicht nur zu einer vorteilhaften Selbstinjektion des Injektionsgutes führen, sondern kann sich auch negativ auswirken, nämlich dann, wenn er sich hinter größeren Lagen sammelt und diese abdrückt. Aufgrund einer inhärenten Elastizität von Kunstharzschäumen geben ferner derartige Schäume bei einer Druckbeanspruchung durch das Gebirge nach, so daß Gebirgsbewegungen möglich sind, die zu einer Neubildung von Gebirgsabrissen führen. Außerdem zeigen die meisten Schäume ein zäh-elastisches Verhalten, mit dem die gebräuchlichen Abbaumaschinen nicht fertig werden.

Eine weitere besondere Gefahrenquelle des Einsatzes von Polyurethan-Reaktionsmischungen liegt in der mangelhaften Beherrschbarkeit der vor Ort in situ entwickelten Reaktionswärme. Bei Injektionen in größere Gebirgshohlräume kann es daher zur Selbstentzündung von Polyurethangemischen kommen. Insbesondere im Kohlebergbau und/oder in Grubenräumen mit einer entzündlichen Atmosphäre ist dies ein bisher noch ungelöstes Problem. Man muß sich daher bei der Rezepturgestaltung so helfen, daß die unvermeidbar sich entwickelnde Reaktionswärme über einen längeren Zeitraum an die Umgebung abgegeben werden kann. Dazu müssen allerdings die Rezepturen hinsichtlich des Reaktionsverhaltens langsam eingestellt werden. Das wiederum bürdet jedoch dem Anwender vor Ort schwerwiegende verarbeitungstechnische Probleme auf und beeinträchtigt die Zuverlässigkeit des Verfahrens. Injektionsrezepturen mit langen Reaktionszeiten sind nämlich anfällig für das Auftreten von Nebenreaktionen, z. B. durch Aufnahme von Wasser, wodurch die Reaktionsstöchiometrie verschoben wird, so daß nicht das gewünschte Reaktionsprodukt erhalten wird. Die bei der Reaktion mit Wasser entstehenden größeren $CO_2$-Mengen bauen einen Gasdruck auf, der in flächenhaften Spalten zum Abdrücken von Gebirgslagen führen kann und damit der

angestrebten Gebirgssicherung entgegenwirkt. Langsam ausreagierende Rezepturen erhöhen ferner das Risiko des Abfließens aus der Gebirgsformation oder Einfließens in Hohlräume unter erheblichem Verlust an Injektionsmaterial. Enge Spaltgänge, die zur Durchdringung eines höheren Injektionsdrucks bedürfen, können dagegen nicht erreicht werden.

Aus Gründen der genannten Art sind dem Einsatz aufschäumender Polyurethane für die Injektion im Kohlenbergbau enge Grenzen gesetzt, wobei dieser Einsatz auch durch behördliche Bestimmungen streng reglementiert wird.

Die Organomineralprodukte haben bei ihrer Verwendung als Injektionsmittel zur Gebirgsverfestigung gegenüber reinen Polyurethanen erhebliche Fortschritte gebracht, haben jedoch auch zu einer Reihe neuer Schwierigkeiten geführt.

Die für den Bereich der vorliegenden Erfindung wichtigen Organomineralprodukte werden aus Polyisocyanaten und wäßrigen Alkalisilikatlösungen erhalten.In derartigen Systemen reagieren Isocyanatgruppen unter Beteiligung des Wassers zu niedrigmolekularen Harnstoffsegmenten, die zwar äußerst hart und tragfähig sind, jedoch nicht zur Klebewirkung gegenüber den Gesteinsschichten beitragen. Das bei der Reaktion gleichzeitig freiwerdende $CO_2$-Gas reagiert mit den in der Alkalisilikatlösung vorhandenen Alkalioxiden ($Me_2O$ , worin Me = Na, K) zu Karbonaten und fällt dabei den Silikatrest als wasserhaltiges Xerogel aus. Bei dieser unkontrollierten Zersetzung der Alkalisilikatlösung geht deren Beitrag zur Klebewirkung verloren. Zur Verbesserung der Haftung sind daher auch in derartigen Reaktionsmischungen Polyolanteile erforderlich, was beispielsweise aus einem Vergleich des Beispiels 1 der DE-A-2 908 746 mit den restlichen Beispielen folgt. Zusätze von Polyolen zu einem Reaktionsgemisch von Isocyanaten in einem wäßrigen alkalischen Medium sind reaktionskinetisch - insbesondere unter den rauhen Bergbaubedingungen - nicht beherrschbar, da bei dem hohen Wasserüberschuß immer die wasserinduzierte Isocyanatreaktion die Hauptreaktion darstellt. Polyole bilden in solchen Systemen daher nur relativ kurzkettige separiert vorliegende organische Molekülsegmente in einer anorganischen Matrix.

Es wurde daher versucht, bei Systemen der genannten Art den Beitrag des organischen Anteils auf Kosten des anorganischen Anteils zu erhöhen. Eine Erhöhung des Kunstharzanteils führt jedoch zu einer Verschlechterung der Wirtschaftlichkeit des Verfahrens.

Gemäß DE-A-3 421 086 wird daher ein anderer Weg beschritten, indem man versucht, die Isocyanatreaktion in Alkalisilikatlösungen durch die gleichzeitige Verwendung eines geeigneten Trimerisierungskatalysators unter gleichzeitiger Beachtung der Mengen der Reaktionsteilnehmer so zu lenken, daß ein sich von der Trimerisierung der Isocyanate ableitendes organisches Netzwerk gebildet wird. Dieses verleiht zwar tatsächlich dem Endprodukt eine außerordentlich hohe Festigkeit, wird jedoch wiederum von harten organischen Molekülstrukturen gebildet, die aufgrund des Fehlens geeigneter funktioneller Endgruppen keinen Verklebungseffekt, insbesondere auf feuchtem Gestein, bewirken können.

Es ist ferner ein Nachteil, daß das Trimerisierungsvermögen des Katalysators nur innerhalb enger Grenzen des Stoffmengenverhältnisses Katalysator/Isocyanatgruppen voll zum Tragen kommt, während bei einer Unter- oder Überschreitung des optimalen Verhältnisses die übliche Isocyanatreaktion mit Wasser stark angeregt wird, so daß ein unerwünscht großer nichtklebefähiger Harnstoffanteil entsteht. Diese formulatorische Beschränkung hat jedoch den verfahrenstechnischen Nachteil, daß bei einer gelegentlich wünschenswerten großen Reaktionsgeschwindigkeit der Rezepturen ein unkontrolliertes Aufschäumen des Injektionsgutes beobachtet wird, das zu einem Produkt führt, welches zu einem leichten Pulver zerdrückt werden kann.

US-A-4 377 646 beschreibt Reaktionsmischungen, die zwangsläufig selbst aufschäumen und stets zu Schäumen führen. Es wird ein Poly(epoxy-polyisocyanat-silikat) dadurch hergestellt, daß man miteinander umsetzt: eine organische Epoxidverbindung, ein Polyisocyanat, eine "oxidierte Siliciumverbindung" und eine Lewissäure. Diese Reaktionsmischung enthält keine wäßrige Wasserglaslösung. Die "oxidierte Siliciumverbindung" ist stets ein Feststoff, der pulverförmig eingesetzt wird. Wasser bzw. wäßrige Wasserglaslösungen werden zwar erwähnt, jedoch ausschließlich als Härter ("curing agents"). Diese werden der Reaktionsmischung erst dann zugesetzt, wenn deren Aufschäumen bereits eingesetzt hat, und zwar um die Reaktion zu stoppen.

Es ist daher die Aufgabe der vorliegenden Erfindung, ein Verfahren zur Herstellung neuer Organomineralprodukte auf der Basis von Polyisocyanaten und wäßrigen Alkalisilikatlösungen anzugeben, das unter Vermeidung der angegebenen verfahrenstechnischen Nachteile in zuverlässiger Weise nicht aufgeschäumte polymere Organomineralprodukte liefert, die einerseits hart sind, jedoch andererseits gegenüber vergleichbaren Produkten eine stark verbesserte Klebefähigkeit aufweisen. Dabei soll einerseits die zur Ausbildung des anorganischen Silikatgerüsts führende Isocyanatreaktion mit Wasser ungehindert ablaufen, anderseits ein Aufschäumen sicher verhindert werden.

Diese Aufgabe wird erfindungsgemäß durch ein Verfahren gemäß Patentanspruch 1 gelöst. Vorteilhafte konkrete Ausgestaltungen dieses Verfahrens sind den Unteransprüchen zu entnehmen.

Nachfolgend wird die Erfindung anhand der für die Zusammensetzung und die Eigenschaften des Verfahrensprodukts wichtigen Reaktionen sowie im Hinblick auf eine genauere Definition möglicher Ausgangsprodukte noch näher erläutert.

In einer Reaktionsmischung, die gemäß der vorliegenden Erfindung Polyisocyanate (R-NCO), eine wäßrige Alkalisilikatlösung ($H_2O$, $Me_2O$ x $nSiO_2$) sowie ein Epoxidharz

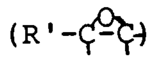

enthält, laufen bei dem erfindungsgemäßen Verfahren die in dem nachfolgenden Formelschema aufgeführten Hauptreaktionen ab. Es sollte dabei jedoch noch darauf hingewiesen werden, daß die Reste R (Isocyanat) und R'(Epoxidharz) entsprechend der Tatsache, daß die Isocyanate überwiegend Di- und höherfunktionelle Polyisocyanate und deren Gemische sind und die Epoxidharze i.d.R. ebenfalls mindestens zwei Epoxidgruppen enthalten, weitere Zentren aufweisen, die im Sinne des nachfolgenden Formelschemas reagieren können. Das bedeutet jedoch, daß die erhaltenen Reaktionsprodukte, die im nachfolgenden Formelschema noch derartige Reste aufweisen, in Wirklichkeit Teile hochpolymerer organischer Gerüste sind.

Die produktbildenden Reaktionen sind:

1. $R\text{-}NCO + H_2O \rightarrow (R\text{-}NH\text{-}COOH) \rightarrow RNH_2 + CO_2 + \text{Wärme}$

2. $R\text{-}NCO + RNH_2 \rightarrow R\text{-}NH\text{-}CO\text{-}NH\text{-}R + \text{Wärme}$

3. $Me_2O + CO_2 \rightarrow Me_2CO_3$

4.

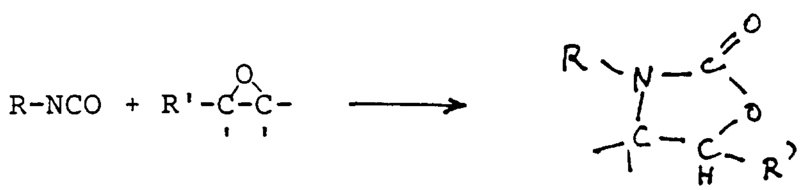

5.

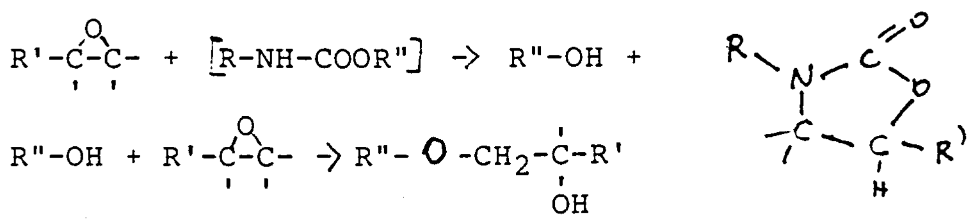

6.

Die in diesen Formeln schematisch dargestellten Reaktionen greifen bei der Durchführung des erfindungsgemäßen Verfahrens zur Herstellung von Organomineralprodukten wie folgt ineinander: Reaktion 1 ist die übliche bekannte Umsetzung von Isocyanaten mit Wasser. Im Rahmen der vorliegenden Umsetzung hat diese Reaktion große Bedeutung als $CO_2$ sowie Wärme liefernde Reaktion. Das bei dieser Reaktion gebildete Amin reagiert auf bekannte Weise in Reaktion 2 unter Bildung von Harnstoffstrukturen, die einen ersten Anteil von später im Reaktionsprodukt zu findenden Feststoffen liefert. Außerdem liefert diese Reaktion 2 weitere Wärme. Für das erfindungsgemäße Verfahren sind die auf dieser Stufe gebildeten Harnstoffeinheiten weniger wichtig als die erzeugte Wärme. Denn während das $CO_2$ in Reaktion 3 auf bekannte Weise unter Ausbildung eines Silikatgerüsts mit dem Alkalioxidanteil des Alkalisilikats abreagiert, also gebunden wird, ermöglicht die in den Reaktionen 1 und 2 erzeugte Wärme die Umsetzung noch nicht mit Wasser umgesetzter Isocyanatgruppen mit dem in der Reaktionsmischung vorhandenen Epoxidharz unter Öffnung des Oxiranrings und Ausbildung von Polyoxazolidinonen, die ein hochpolymeres organisches Tragegerüst ausbilden.

Es ist dabei an dieser Stelle darauf hinzuweisen, daß in den Reaktionen 1 und 2 zur Erzeugung von 1 Mol $CO_2$ 2 Mol R-NCO (= 2 x Mol) verbraucht werden. Da dieses $CO_2$ zur Verhinderung eines

Aufschäumens vollständig von der Reaktionsmischung gebunden werden soll, müssen aus Gründen der Reaktionsstöchiometrie Isocyanatgruppen und $Me_2O$-Moleküle in einem Stoffmengenverhältnis von 2 : 1 in der Reaktionsmischung vorliegen.

Da in der Reaktion 4 äquimolare Mengen von Isocyanat- und Epoxid-Gruppen miteinander reagieren, ist für diese Umsetzung ein weiterer zusätzlicher Anteil an Isocyanatgruppen (y) erforderlich.

Zusätzlich zu den Netzwerk bildenden Grundreaktionen 1 bis 4 sind für die Eigenschaften der bei dem erfindungsgemäßen Verfahren hergestellten Produkte jedoch noch zwei weitere Reaktionen von außerordentlicher Bedeutung. Da die Epoxidharze bzw. die aus diesen bei der Umsetzung gebildeten Polymeren unvermeidlich einen gewissen Anteil an funktionellen Hydroxylgruppen enthalten, bilden sich in der Reaktionsmischung als intermediär entstehende Nebenprodukte Urethansegmente, die in Formel 5 schematisch durch den Klammerausdruck dargestellt werden. Mit derartigen Urethansegmenten können die Epoxidharze ebenfalls unter Oxazolidinonbildung reagieren, wobei von Bedeutung ist, daß dabei organische Produkte mit freien Hydroxylgruppen (R''-OH) erzeugt werden.

Diese Hydroxylverbindungen können sich ebenfalls mit Epoxideinheiten der anwesenden Epoxidharze umsetzen, wobei ebenfalls organische Strukturen mit freien Hydroxylgruppen gebildet werden (Reaktion 6).

Bei dem erfindungsgemäßen Verfahren werden somit zwangsläufig als Produkte von Nebenreaktionen hydroxylgruppenhaltige Segmente in den erzeugten Polymerketten gebildet. Diese Hydroxylgruppen sind für die Eigenschaften der erhaltenen Produkte jedoch außerordentlich wichtig, da sie bewirken, daß auch das gebildete organische Polymergerüst klebende Eigenschaften aufweist, indem sich Wasserstoffbrücken zu den an der Oberfläche des Gesteinsmaterials befindlichen Sauerstoffunktionen ausbilden können, und zwar gemäß der folgenden schematischen Darstellung:

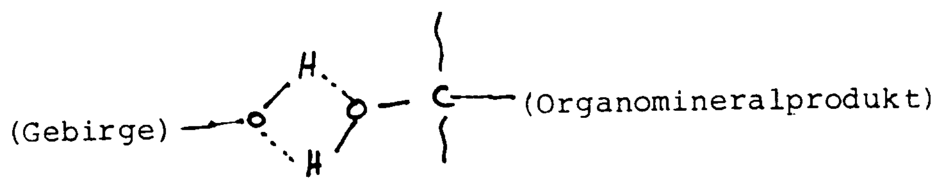


Im Gegensatz zu den bekannten Verfahren, bei denen das organische Polymergerüst keinerlei klebende Wirkung entfaltete, wird bei dem erfindungsgemäßen Verfahren ein klebendes Polymergerüst gebildet, das neben dem anorganischen Silikatgerüst zur Haftungsverbesserung zwischen Gestein und Kunstharz beiträgt. Indem bei der erfindungsgemäßen Rezeptur darauf geachtet wird, daß stets die zur Bindung des entwickelten $CO_2$ nötige Alkalioxidmenge vorhanden ist, wird ein Aufschäumen vermieden.

Daß die überschüssigen Isocyanatgruppen tatsächlich mit dem Epoxid und nicht mit überschüssigem Wasser reagieren, wird durch die bei den Grundreaktionen erzeugte Wärme sichergestellt, wobei außerdem i. d. R. geeignete Katalysatoren noch eine wichtige Steuerfunktion übernehmen. Geeignete Katalysatoren können Katalysatoren auf Aminbasis, insbesondere auf der Basis tertiärer Amine bzw. quaternärer Ammoniumsalze, Katalysatoren in Form organometallischer Verbindungen oder Katalysatoren in Form anorganischer Salze sein. Es ist dabei darauf hinzuweisen, daß im Rahmen des erfindungsgemäßen Verfahrens Aminkatalysatoren wie 2,4,6-Tris(dimethylaminomethyl)phenol oder auch Benzyldimethylamin eindeutig bevorzugt die Isocyanat/Epoxid-Reaktion katalysieren, während sie in Abwesenheit von Epoxiden als Trimerisierungskatalysatoren wirken (vgl. DE-A-3 421 086). Anorganische Salze, insbesondere $FeCl_3$, $AlCl_3$ oder $ZnCl_2$ aktivieren insbesondere die Epoxidgruppen zur Reaktion mit NCO-Gruppen, hemmen jedoch die Reaktion zwischen Isocyanat- und OH-Gruppen. Derartige Verbindungen finden sich daher in wirksamen Mengen in technischen Isocyanaten als Verzögerer,die in den Spezifikationen als hydrolisierbares Chlor oder als Gesamtchlor ausgewiesen werden. Die Tatsache, daß derartige, im Rahmen des erfindungsgemäßen Verfahrens katalytisch wirkende Salze sowieso in technischen Polyisocyanaten enthalten sind, hat den zusätzlichen Vorteil, daß in vielen Fällen auf den gesonderten Zusatz eines weiteren Katalysators verzichtet werden kann.

Auch organometallische Verbindungen, z. B. Triisopropylaluminium $Al(i\text{-}C_3H_7)_3$, sind geeignete Katalysatoren für das erfindungsgemäße Verfahren, durch deren gezielte Auswahl Reaktionsmischungen mit den für den jeweiligen Anwendungszweck gewünschten Eigenschaften erhältlich sind. Neben der erfindungsgemäß berechenbaren Stöchiometrie tragen Katalysatoren mit dazu bei, das an sich sehr komplexe Reaktionssystem Epoxidharz-Wasserglas-Polyisocyanat sicher zu beherrschen.

Dabei ist es das Ziel einer jeden Rezepturgestaltung für die Durchführung des erfindungsgemäßen Verfahrens, durch Variation von Menge und Art des Katalysators bzw. Katalysatorsystems sowie der

Reaktionspartner die folgenden Voraussetzungen zu schaffen:

1. Die Isocyanat-Wasser-Reaktion darf nur soweit fortschreiten, wie das dabei entstehende $CO_2$-Gas von der Gesamtrezeptur aufgenommen werden kann.

2. Die bei dieser Startreaktion gebildete exotherme Wärme und der die Oxazolidinonbildung anregende Katalysator müssen so aufeinander abgestimmt sein, daß auch in wäßrigen alkalischen Systemen Polymergerüste auf organischer Basis entstehen.

Um Voraussetzung Nr. 1 zu erfüllen, ist darauf zu achten, daß das in Patentanspruch 1 näher definierte Verhältnis der Reaktionspartner eingehalten wird, nämlich die Bedingung, daß die Organomineralprodukte in Form massiver, nicht geschäumter Produkte hergestellt werden und man die an der Umsetzung beteiligten Reaktionspartner Polyisocyanat, wäßrige Alkalisilikatlösung und Epoxidharz in solchen Stoffmengenverhältnissen einsetzt, daß die folgende Beziehung erfüllt ist:

$x(Me_2O)$ + y( 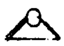 ) + (2x + y) (NCO) → Produkte

wobei $x(Me_2O)$ die Stoffmenge in mol an Natrium- und/oder Kaliumoxid im eingesetzten Alkalisilikat ist,
Y( 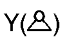 ) die Stoffmenge in mol der Epoxidgruppen im eingesetzten Epoxidharz ist,
(2x + y)(NCO) die Stoffmenge der -NCO-Gruppen in mol im eingesetzten Polyisocyanat ist, und wobei Me für Na oder K steht und x und y die jeweiligen relativen Molmengen ausdrückende positive Zahlen sind, die eine Toleranzbreite aufweisen, die die üblichen Qualitätsschwankungen der einzelnen Reaktionspartner berücksichtigen, wenn diese als technische Handelsprodukte eingesetzt werden,
und wobei das Epoxidharz in einer Menge verwendet wird, die von 0,01 bis 60 Gew.-%, bezogen auf das Gewicht der eingesetzten Alkalisilikatlösung, beträgt.

Das richtige Verhältnis von Isocyanatgruppen zu Epoxidgruppen in der Reaktionsmischung sowie, darauf abgestimmt, die Wirksamkeit des die Reaktion 4 aktivierenden Katalysators gewährleistet die Einhaltung der obigen Voraussetzung Nr. 2.

Vorzugsweise werden Reaktionsgemische hergestellt aus Einsatzstoffen, die die folgenden Bedingungen erfüllen:

| | |
|---|---|
| NCO-Gruppen (aus dem Polyisocyanat) | 0,238- 1,19 mol pro 100g |
| $Me_2O$ (aus Alkalisilikatlösung) | 0,081- 0,323 mol pro 100g |
| Epoxideinheiten (Oxiranringe; aus Epoxidharz) | 0,020- 0,80 mol pro 100g |

Vorzugsweise werden solche Mengen an Alkalisilikatlösung und Epoxidharz eingesetzt, daß die Alkalisilikatlösung und das Epoxidharz, die gemäß einer Ausführungsform in Form einer als "Komponente A" bezeichneten Vormischung eingesetzt werden, in einer nur diese beiden Bestandteile enthaltenden Vormischung in Mengen von 70 bis 95 Gew.-% Alkalisilikatlösung und 5 bis 30 Gew.-% Epoxidharz vorliegen. Diese Mengen entsprechen einem Gehalt von $Me_2O$ von 0,09 bis 0,28 mol pro 100 g bzw. von 15 bis 210 mmol Epoxidgruppen pro 100 g.

Aus diesen Angaben läßt sich ein bevorzugter Bereich für das Verhältnis x/y von 0,4 bis 18,6 ableiten.

Da das Verfahren üblicherweise mit Ausgangsprodukten technischer Qualität durchgeführt wird, ergeben sich aufgrund üblicher Produktschwankungen ferner natürliche Toleranzen für die Stoffmengen der obigen Reaktionspartner im Rahmen des angegebenen Stoffmengenverhältnisses. Unter Zugrundelegung derzeit in der Praxis feststellbarer Qualitätsschwankungen gelten dabei ungefähr die folgenden Toleranzen:

(NCO) ± 5 %
($Me_2O$) ± 2,5 %
( 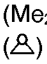 ) ± 7,5 %

Unter Berücksichtigung der verschiedenen möglichen in das erfindungsgemäße Verfahren einsetzbaren Wasserglasqualitäten und Epoxidharze ergibt sich ferner, daß das Epoxidharz in einer Reaktionsmischung für das erfindungsgemäße Verfahren in einem Anteil von 0,01 bis 60 Gew.-%, bezogen auf das Gewicht der verwendeten Wasserglaslösung, zugegen sein kann.

Wie bereits angedeutet, können in das erfindungsgemäße Verfahren die üblichen, bisher bei derartigen Verfahren verwendeten Polyisocyanate und wäßrigen Alkalisilikatlösungen eingesetzt werden.

Die Polyisocyanate sind dabei reine oder technische Polyisocyanate, insbesondere lösungsmittelfreies 4,4'-Diphenylmethandiisocyanat im Gemisch mit höherfunktionellen Isocyanaten, wie sie von verschiedenen Herstellern, als Roh-MDI bezeichnet, marktgängig sind. Es können aber auch sog. Prepolymere, die noch

reaktionsfähige NCO-Gruppen aufweisen, eingesetzt werden. Solche Produkte erhält man durch Umsetzung von Polyisocyanaten mit organischen Verbindungen, die gegenüber NCO-Gruppen mindestens ein, vorzugsweise jedoch zwei oder mehrere aktive Wasserstoffatome aufweisen. Solche Prepolymere sind dem Polyurethanchemiker bekannt. Erfinderischerweise wird jedoch der Einsatz eines Prepolymeren beansprucht, welches aus einem Monoisocyanat und einem anspruchsgemäßen epoxidringhaltigen Harz hergestellt wird.Dabei werden in stöchiometrischer oder überschüssiger Menge NCO-Gruppen mit den bei der Herstellung des epoxidgruppenhaltigen Harzes unvermeidbar entstehende OH-Gruppen zur Reaktion gebracht, wobei ein Prepolymeres entsteht, welches OH-gruppenfrei ist. Dieses Prepolymere bleibt über Monate hindurch lagerstabil. Weiterhin kann es (siehe Beispiel 7) dem technischen Isocyanat, welches üblicherweise einen die Oxazolidionbildung anregenden Katalysator enthält, zugegeben werden, wobei man auch für diese Komponente noch ausreichende Lagerstabilität erhält.

Als wäßrige Alkalisilikatlösungen können Natrium- und/oder Kaliumwassergläser, sowie deren Gemische mit einem gelösten Feststoffgehalt von 10 bis 60 Gew.-%, insbesondere von 35 bis 55 Gew.-%, und einem Gehalt an Alkalimetalloxid von 5 bis 20 Gew.-%, insbesondere 8 bis 18 Gew.-%, verwendet werden. Die in diesem Bereich liegenden Wassergläser zeigen bezüglich ihrer erfinderischen Verwertung gute prozeßtechnische Eigenschaften, wie Fließfähigkeit, gut einsetzbare reaktionskinetische Eigenschaften wie ein spezifischer Wärmebereich und allgemeine physiologische sowie Umwelt-Unbedenklichkeit.

Außerdem überbrücken sie den Bereich, der je nach Rezeptur ein Endprodukt mit hohem oder niedrigem Wassergehalt ergibt, wobei das Produkt überraschenderweise mit niedrigem Wassergehalt, wie in nach Beispiel 9, als gasdicht mit einem Wert von < ImD (Milli-Darcy) gelten kann.

Als Epoxidharze können an sich bekannte Epoxidharze verwendet werden, die einen Gehalt an funktionellen Epoxidgruppen im breiten Bereich von 200 bis 8000 mMol/kg, vorzugsweise im Bereich von 300 bis 700 mMol/kg aufweisen. Zu derartigen Harzen gehören insbesondere Epoxidharze auf der Basis eines modifizierten Bisphenol-A, auf der Basis dimerer Fettsäuren oder übliche Bisphenol-A-Epoxidharze. Derartige Harze weisen mindestens zwei Epoxidgruppen auf, wobei jedoch auch Monoepoxide mit eingemischt werden können. Es können jedoch auch höher funktionelle Epoxidharze verwendet werden, beispielsweise Epoxidharze auf Phenol-Novolak-Basis.

Nach dem erfindungsgemäßen Verfahren kann man vorzugsweise nach zwei Mischmethoden arbeiten. Nach der ersten Methode wird eine A-Komponente aus epoxidgruppenhaltigem Material mit der Alkalisilikatlösung hergestellt, die anschließend mit der berechneten Menge B-Komponente zur Reaktion gebracht wird. Bei Einsatz eines technischen Polyisocyanates als B-Komponente hat man bereits einen die Oxazolidinonreaktion aktivierenden Katalysator zugegeben. Zusätzlich können noch andere Katalysatoren der erfindungsgemäßen Art der B-Komponente zugegeben werden. Nach der zweiten Methode besteht die A-Komponente lediglich aus einer erfindungsgemäßen Alkalisilikatlösung und ggf. einem Katalysator. Die B-Komponente besteht in diesem Fall aus dem Polyisocyanat und dem epoxidgruppenhaltigen Material. Vorzugsweise setzt man hierbei das weiter oben beschriebene , durch Monoisocyanate "inertisierte" Polyepoxid ein. Bei entsprechender Inertheit gegenüber den A- und B-Komponenten können zur Erzielung besonderer Eigenschaften weitere Zusatzstoffe mit eingemischt werden. Hierbei seien genannt Füllstoffe, wie z. B. disperse Kieselsäuren, Diatomeenerde, natürliche und künstliche Fasern unterschiedlicher Länge, elektrisch leitfähigmachende Ruße, Farbstoffe, Mikrohohlkugeln, Flugasche, Sand, Quarzmehl.

Wenn das erfindungsgemäße Verfahren als Verfahren zur Gebirgsverfestigung durchgeführt wird, wird auf an sich bekannte Weise durch Mischung der Reaktionspartner im oben angegebenen Sinne eine Reaktionsmischung der gewünschten Viskosität hergestellt, und diese Reaktionsmischung wird umgehend unter Druck in das zu verfestigende Gebirge injiziert, wobei auf an sich bekannte, im eingangs zitierten Stand der Technik geschilderte Techniken zurückgegriffen werden kann. Da die erfindungsgemäßen Produkte keine Schäume sind, sind Selbstinjektionsverfahren (Einfüllen in ein Bohrloch und einfaches Verschließen) ausgeschlossen.

Die nach dieser Lehre herstellbaren Materialien sind durch die Variation von anorganischem zu organischem Polymeranteil vielseitig einsetzbar, da wichtige Polymereigenschaften, wie beispielsweise E-Modul und Druckfestigkeit in weiten Bereichen einstellbar sind.

So sind Rezepturen mit hohem silikatischem Anteil steinartige Massen, Rezepturen mit hohem organischen Anteil weisen eher typische Eigenschaften polymerer Werkstoffe auf.

Aufgrund ihres Reaktionsverhalten lassen sich die Komponenten auch in offene und/oder geschlossene Formen einspritzen, so daß daraus Abformungen oder Platten, Stäbe Rahmen, Modelle, Maschinenteile etc. hergestellt werden können.

Auch das Aufspritzen über Zwei-Komponenten Spritzpistolen, auf trockene und/oder feuchte Untergründe ist wegen der Möglichkeit der chemischen Verankerung zum Substrat durchführbar. Ungeschützter Stahl kann auf diese Weise beispielhaft mit einem Korrosionsschutz versehen werden. Schadhafte Spannbetonbauwerke können durch Injektion mit den neuen Materialien nicht nur in ihrer Statik verbessert werden, sondern erhalten gleichzeitig einen Korrosionsschutz, der auch wegen der eingelagerten Puffersalze saure Abwässer neutralisieren kann.

Nachfolgend wird die Erfindung anhand von Ausführungsbeispielen, die ausgewählte Reaktionsmischungen für die Durchführung des erfindungsgemäßen Verfahrens sowie Vergleichsmischungen betreffen, näher erläutert. Dabei wird auf eine Figur Bezug genommen, die eine Mikrophotographie eines nach dem erfindungsgemäßen Verfahren hergestellten (Vergrößerung 1 : 1000) Produkts wiedergibt.

In den nachfolgenden Beispielen werden die Alkalisilikatlösungen, die Epoxidharze, die Polyisocyanate, die Katalysatoren, die Stabilisatoren und der Füllstoff mit Kurzbezeichnungen bezeichnet, hinter denen sich die der nachfolgenden Aufstellung entnehmbaren Produkte verbergen:

Einsatzstoffe:

| | Gew.-% $Me_2O$ | Gew.-% des Gesamtfeststoffes | Me |
|---|---|---|---|
| Wasserglas - 1: | 12.0 | 45.0 | Na |
| Wasserglas - 2: | 13.8 | 47.0 | Na |
| Wasserglas - 3: | 8.8 | 38.0 | Na |
| Wasserglas - 4: | 18.0 | 54.5 | Na |
| Wasserglas - 5: | 5.8 | 28.1 | Na |
| Wasserglas - 6: | 13.5 | 40.5 | K |

| | Typ | mMol Epoxid / kg |
|---|---|---|
| Epoxid 1 | MOD. Bisphenol-A | 4.650-5.130 |
| 2 | Dimerfettsäurebasis | 2.130-2.560 |
| 3 | Bisphenol-A Standard | 5.150-5.550 |
| 4 | Phenol-Novolak | 5.260 |

| | |
|---|---|
| R-NCO-1 | Diphenylmethan-4,4'-diisocyanat<br>Freier NCO-Gehalt 31 ± 1 Gew.-%<br>Hydrolysierbares Chlor 0.1 - 0.45 % |
| R-NCO-2 | Phenyl-Isocyanat, technisch rein |
| Katalysator-1 | Dimethylbenzylamin |
| Katalysator-2 | 2,4,6-Trisdimethylaminomethylphenol |
| Katalysator-3 | Dioktylzinnmerkaptid |
| Katalysator-4 | Aluminiumisopropylat, Reinheit > 98 % |
| Stabilisator-1 | Silicon-GLYCOL-Copolymer, ohne freie OH-Gruppen |
| Stabilisator-2 | Silicon-Copolymer mit einer Hydroxylzahl von 30 ± 5 (mgKOH/g) |
| Füllstoff | Disperse Kieselsäure |

Beispiele 1 bis 10

In den nachfolgenden Beispielen 1 bis 10 werden die der nachfolgenden Tabelle 1 entnehmbaren Ausgangsmaterialien eingesetzt, wobei gleichzeitig angegeben wird, welche Bestandteile zur Bereitung der Reaktionsmischung gemeinsam in Form einer Komponente A bzw. Komponente B zugegeben wurden.

Tabelle 1 *

| Beispiel | 1 | | 2 | | 3 | | 4 | |
|---|---|---|---|---|---|---|---|---|
| Einsatzstoffe | A | B | A | B | A | B | A | B |
| Wasserglas-1 | 80.0 | | | | | | | |
| Wasserglas-2 | | | 84.15 | | 84.15 | | | |
| Wasserglas-3 | | | | | | | | |
| Wasserglas-4 | | | | | | | | |
| Wasserglas-5 | | | | | | | | |
| Wasserglas-6 | | | | | | | 100 | |
| Epoxid-1 | 20.0 | | | 2.50 | | | 10 | |
| Epoxid-2 | | | | | | | | |
| Epoxid-3 | | | | | | 2.50 | | |
| Epoxid-4 | | | | | | | | |
| R-NCO-1 | | 55.22 | | 52.43 | | | | 54.64 |
| R-NCO-2 | | | | | | | | |
| Katalysator-1 | | 0.5 | | | | | | 0.5 |
| Katalysator-2 | | | 0.5 | | 0.5 | | | |
| Katalysator-3 | | | | | | 0.50 | | |
| Katalysator-4 | | | | | | | | |
| Stabilisator-1 | | 1.0 | | 1.0 | | 1.0 | | 1.0 |
| Stabilisator-2 | | | | | | | | |
| Füllstoff | | | | | | | | |

*Mengenangaben der Einsatzstoffe in Gewichtsteilen

Tabelle 1 *

| Beispiel | 5 | | 6 | | 7 | | 8 | | 9 | | 10 | |
|---|---|---|---|---|---|---|---|---|---|---|---|---|
| Einsatzstoffe | A | B | A | B | A | B | A | B | A | B | A | B |
| Wasserglas-1 | | | | | 49.25 | | | | | | | |
| Wasserglas-2 | | | | | 50.25 | | 95 | | 90 | | | |
| Wasserglas-3 | 70 | | | | | | | | | | | |
| Wasserglas-4 | | | 95 | | | | | | | | | |
| Wasserglas-5 | | | | | | | | | | | 88 | |
| Wasserglas-6 | | | | | | | | | | | | |
| Epoxid-1 | | | | | | 6.175 | | | 10 | | | |
| Epoxid-2 | 30 | | 5 | | | | | | | | 10 | |
| Epoxid-3 | | | | | | | | | | | | |
| Epoxid-4 | | | | | | | 5 | | | | | |
| R-NCO-1 | | 36.46 | | 76.30 | | 56.04 | | 60.88 | | 60.92 | | 25.5 |
| R-NCO-2 | | | | | | 0.325 | | | | | | |
| Katalysator-1 | | 0.5 | | 0.5 | | | | 0.8 | | | | 0.5 |
| Katalysator-2 | | | | | 0.5 | | | | | | | |
| Katalysator-4 | | | | | | | | | | 1.0 | | |
| Stabilisator-1 | | 1.0 | | 1.0 | | 1.5 | | 1.6 | | | | 1.5 |
| Stabilisator-2 | | | | | | | | | | 2.0 | | |
| Füllstoff | | | | | | | | | | | 5 | |

*Mengenangaben der Einsatzstoffe in Gewichtsteilen

Beispiel 1

Die A- und B-Komponenten werden in dem angegebenen Mischungsverhältnis so lange miteinander vermischt, bis eine weißliche Emulsion entsteht.

Der Reaktionsbeginn zeigt sich durch Viskositätszunahme und Wärmeabgabe an.

Der Reaktionsverlauf läßt sich mit einem Shore-Härte Prüfgerät verfolgen:

| Min. | Shorehärte |
|---|---|
| 5 | 20 D |
| 15 | 30 D |
| 30 | 40 D |
| 60 | 45 D |

Aus der Reaktion ist ein hellgelbes nicht aufschäumendes, aber auch nicht schrumpfendes Material entstanden.

Beispiel 1a (Vergleich)

Reduziert man den Anteil der B-Komponente aus Beispiel 1 um 50 %, so erhält man ein wasserhaltiges Xerogel, das stark schrumpft- und geringe Festigkeit aufweist.

Beispiel 2

Die A- und B-Komponenten werden in dem angegebenen Mischungsverhältnis so lange miteinander vermischt, bis eine weißliche Emulsion entsteht.
Der Reaktionsbeginn zeigt sich durch Viskositätszunahme und Wärmeabgabe an.
Der Reaktionsverlauf läßt sich mit einem Shore-Härte Prüfgerät verfolgen:

| Min. | Shore-Härte |
|---|---|
| 5 | Fließgrenze |
| 15 | 74 A |
| 17 | 90 A |
| 45 | 40 D |

Aus der Reaktion ist ein hellgelbes nicht aufschäumendes, aber auch nicht schrumpfendes Material entstanden.

Beispiel 3

Die A- und B-Komponenten werden in dem angegebenen Mischungsverhältnis so lange miteinander vermischt, bis eine weißliche Emulsion entsteht.
Der Reaktionsbeginn zeigt sich durch Viskositätszunahme und Wärmeabgabe an.
Der Reaktionsverlauf läßt sich mit einem Shore-Härte Prüfgerät verfolgen:

| Min. | Shore-Härte |
|---|---|
| 1 | Fließgrenze |
| 2 | 95 A |
| 3 | 50 D |
| 4 | 55 D |
| 5 | 60 D |

Aus der Reaktion ist ein hellgelbes nicht aufschäumendes, aber auch nicht schrumpfendes Material entstanden.

Beispiel 4

Die A- und B-Komponenten werden in dem angegebenen Mischungsverhältnis so lange miteinander vermischt, bis eine weißliche Emulsion entsteht.
Der Reaktionsbeginn zeigt sich durch Viskositätszunahme und Wärmeabgabe an.
Der Reaktionsverlauf läßt sich mit einem Shore-Härte Prüfgerät verfolgen:

| Min. | Shore-Härte |
|---|---|
| 4 | 15 A |
| 5 | 65 A |
| 5 30″ | 20 D |
| 6 | 30 D |

Aus der Reaktion ist ein hellgelbes nicht aufschäumendes, aber auch nicht schrumpfendes Material entstanden.

Beispiel 4a (Vergleich)

Reduziert man den Anteil des Polyisocyanates aus Beispiel 4 um ca.30 Gew.-%, so entsteht ein stark schrumpfendes Xerogel, daß nach Wasserabgabe aushärtet.

Beispiel 5

Die A- und B-Komponenten werden in dem angegebenen Mischungsverhältnis so lange miteinander vermischt, bis eine weißliche Emulsion entsteht.

Der Reaktionsbeginn zeigt sich durch Viskositätszunahme und Wärmeabgabe an.

Der Reaktionsverlauf läßt sich mit einem Shore-Härte Prüfgerät verfolgen:

| Min. | Shore-Härte |
|---|---|
| 3 30″ | Fließgrenze |
| 10 | 30 D |
| 15 | 40 D |
| 30 | 45 D |
| 1 d | 50 D |

Aus der Reaktion ist ein hellgelbes nicht aufschäumendes, aber auch nicht schrumpfendes Material entstanden.

Beispiel 5a (Vergleich)

Reduziert man den Anteil des Polyisocyanates aus Beispiel 5 um ca. 15 Gew.-%,so entsteht zwar ein wenig schrumpfendes, jedoch relativ weiches Material, welches nach 20 Minuten eine Shore-Härte von 10 A und nach einem Tag eine Shore-Härte von 35 D aufweist.

Beispiel 6

Die A- und B-Komponenten werden in dem angegebenen Mischungsverhältnis so lange miteinander vermischt, bis eine weißliche Emulsion entsteht.

Der Reaktionsbeginn zeigt sich durch Viskositätszunahme und Wärmeabgabe an.

Der Reaktionsverlauf läßt sich mit einem Shore-Härte Prüfgerät verfolgen.

Es entsteht ein sehr festes hellgelbes Harz mit niedrigem Wasseranteil, bei gleichzeitig hohem anorganischem Anteil. Die Figur zeigt eine Mikrophotographie einer Bruchfläche des in diesem Beispiel erhaltenen Materials bei einer Vergrößerung von 1 : 1000.

Beispiel 7

In einen Betonklotz wurden Löcher mit einem Durchmesser von 50 mm und einer Tiefe von 900 mm gebohrt. In das Bohrloch wurde ein Hohlanker aus Stahl eingeschoben und mittels eines Bohrlochverschlusses zentriert und gesichert. Über den Hohlanker wurde das Bohrloch mit dem Injektionsgut nach Beispiel 7 unter Einsatz einer Hochdruckinjektionsmaschine verpreßt.

Nach 30 Min. wurde die Auszugkraft des Ankers mit einem hydraulischen Zuggerät geprüft. Der Anker (0 30 mm) ließ sich nicht herausziehen. Bei Erhöhung der hydraulischen Kraft, riß schließlich der Ankerkopf.

Beispiel 8

Die A- und B-Komponenten werden in dem angegebenen Mischungsverhältnis so lange miteinander vermischt, bis eine weißliche Emulsion entsteht.

Der Reaktionsbeginn zeigt sich durch Viskositätszunahme und Wärmeabgabe an.

Der Reaktionsverlauf läßt sich mit einem Shore-Härte Prüfgerät verfolgen:

| Min. | Shore-Härte |
|---|---|
| 45 | Fließgrenze |
| 1 | 65 D |

Es entsteht ein sehr festes hellgelbes Harz das weder schrumpft noch aufschäumt.

Beispiel 9

Die A- und B-Komponenten werden in dem angegebenen Mischungsverhältnis so lange miteinander vermischt, bis eine weißliche Emulsion entsteht.

Der Reaktionsbeginn zeigt sich durch Viskositätszunahme und Wärmeabgabe an.

Der Reaktionsverlauf läßt sich mit einem Shore-Härte Prüfgerät verfolgen:

| Min. | Shore-Härte |
|---|---|
| 5 | Fließgrenze |
| 20 | 25 A |
| 25 | 15 D |
| 30 | 20 D |
| 60 | 55 D |

Es entsteht ein sehr festes hellgelbes Harz das weder schrumpft noch aufschäumt.

Beispiel 10

Die A- und B-Komponenten werden in dem angegebenen Mischungsverhältnis so lange miteinander vermischt, bis eine weißliche Emulsion entsteht.

Der Reaktionsbeginn zeigt sich durch Viskositätszunahme und Wärmeabgabe an.

Nach der Reaktion entsteht ein Material mit hohem Kieselsäureanteil und hoher Gaspermeation.

Nachfolgend wird anhand von Vergleichsbeispielen nachgewiesen, daß bei Verfahrensbedingungen, die nicht den Bedingungen des erfindungsgemäßen Verfahrens entsprechen, minderwertige oder völlig unbrauchbare Organomineralprodukte erhalten werden.

Tabelle 2

| Vergleichsbeispiel | 1 | | 2 | | 3 | |
|---|---|---|---|---|---|---|
| Einsatzstoffe* | Komp-A | Komp-B | Komp-A | Komp-B | Komp-A | Komp-B |
| Wasser, Demin, $CO_2$-frei | 53.00 | | 65.50 | | 25.00 | |
| Wasserglas 1 | | | | | 25.00 | |
| NaOH | | | 17.82 | | | |
| Polyisocyanat-31** | | 60.30 | | 60.30 | | 30.15 |
| Katalysator 1 | | 0.50 | | 0.50 | | 0.25 |
| Polysiloxan 1 | | 1.00 | | 1.00 | | 0.50 |

*Mengenangaben der Einsatzstoffe in Gewichtsteilen

** Polymethylpolyphenylisocyanat mit 30-31 Gew.-% freien Isocyanatgruppen, einer Acidität von 0,12% HCl und 0,35 Gew.-% hydrolysierbarem Chlor

Vergleichsbeispiel 1

In einem Rührgefäß werden die nacheinander eingebrachten Komponenten A + B gemischt, bis eine Emulsion entsteht. Nach ca. 1 Minute Rührzeit beginnt die Masse - erkenntlich an der Wärmetönung - zu reagieren. Dabei bildet sich ein leichter hellgelber Schaum ohne brauchbare Festigkeit.

Vergleichsbeispiel 2

In einem Rührgefäß werden die nacheinander eingebrachten Komponenten A + B gemischt, bis eine Emulsion entsteht. Nach weniger als einer Minute Rührzeit beginnt die Masse - erkenntlich an der Wärmetönung - zu reagieren. Es entsteht eine nicht aufgeschäumte Masse, bestehend aus wasserhaltigen Granulen. Der ursprüngliche pH-Wert des Reaktionsmischers von 14 ist nach der Reaktion auf einen Wert von 9 - 10 zurückgegangen.

Vergleichsbeispiel 3

In einem Rührgefäß werden die nacheinander eingebrachten Komponenten A + B gemischt, bis eine Emulsion entsteht. Nach etwa 1 Minute Rührzeit beginnt die Masse - erkennbar an der Wärmetönung - zu reagieren, zunächst entsteht ein nicht aufschäumendes Produkt, welches jedoch in der zweiten Reaktionsphase sich zu einem hellgelben Schaum ausbildet. Am Ende der Reaktionszeit wird der spröde Schaum durch plötzliches Austreten von $CO_2$ und Wasserdampf von innenher teilweise zerrissen.

**Patentansprüche**

**1.** Verfahren zur Herstellung von Organomineralprodukten unter Umsetzung von organischen Polyisocyanaten in Gegenwart von wäßrigen Alkalisilikatlösungen,
dadurch gekennzeichnet, daß man die Umsetzung unter Verwendung einer Reaktionsmischung durchführt, die als weiteren Reaktionspartner ein Epoxidharz enthält, das unter den Umsetzungsbedingungen mit dem Polyisocyanat bzw. einer daraus in der Reaktionsmischung intermediär gebildeten Verbindung unter Bildung von Oxazolidinon-Ringstrukturen enthaltenden organischen Polymergerüsten reagiert, wobei

- die Polyisocyanate ausgewählt sind aus chemisch reinen oder technischen Polyisocyanaten, Mischungen derartiger Polyisocyanate mit organischen Monoisocyanaten und aus Präpolymeren davon, die noch reaktionsfähige NCO-Gruppen aufweisen;
- die wäßrige Alkalisilikatlösung einen gelösten Feststoffgehalt im Bereich von 10 bis 60 Gew.-% und einen $Me_2O$-Gehalt von 5,0 bis 20 Gew.-% aufweist und
- das verwendete Epoxidharz einen Gehalt an funktionellen Epoxidgruppen von 200 bis 8000 mmol/kg Epoxidharz aufweist
- und daß man die Reaktionspartner Polyisocyanat, wäßrige Alkalisilikatlösung und Epoxidharz in solchen Stoffmengenverhältnissen einsetzt, daß die folgende Beziehung erfüllt ist:

$x(Me_2O)$ + y( 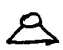 ) + $(2x + y)(NCO) \longrightarrow$ Organomineralprodukte

wobei $x(Me_2O)$ die Stoffmenge in mol an Natrium- und/oder Kaliumoxid im eingesetzten Alkalisilikat ist,
y(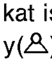) die Stoffmenge in mol der Epoxidgruppen im eingesetzten Epoxidharz ist,
$(2x + y)(NCO)$ die Stoffmenge der -NCO-Gruppen im eingesetzten Polyisocyanat ist, und wobei Me für Na und/oder K steht und x und y die jeweiligen relativen Molmengen ausdrückende Positive Zahlen sind, die eine Toleranzbreite aufweisen, die die üblichen Qualitätsschwankungen der einzelnen Reaktionspartner berücksichtigt, wenn diese als technische Handelsprodukte eingesetzt werden,
und das Epoxidharz in einer Menge verwendet wird, die von 0,01 bis 60 Gew.-%, bezogen auf das Gewicht der eingesetzten Alkalisilikatlösung, beträgt.

**2.** Verfahren nach Anspruch 1, dadurch gekennzeichnet, daß die Organomineralprodukte in Form massiver, nicht aufgeschäumter Produkte hergestellt werden.

**3.** Verfahren nach Anspruch 1, dadurch gekennzeichnet, daß ein Polyisocyanat verwendet wird, dessen Gehalt an NCO-Gruppen im Bereich von 0,238 bis 1,190 mol pro 100 g Polyisocyanat liegt und daß eine solche wäßrige Alkalisilikatlösung verwendet wird, daß der Gehalt an $Me_2O$ im Bereich von 0,081 bis 0,323 mol pro 100 g Alkalisilikatlösung liegt.

**4.** Verfahren nach einem der Ansprüche 1 bis 3, dadurch gekennzeichnet, daß der Gehalt an freien NCO-Gruppen im verwendeten Polyisocyanat im Bereich von 10 bis 50 Gew.-%, vorzugsweise von 25 bis 35 Gew.-%, liegt.

**5.** Verfahren nach einem der vorausgehenden Ansprüche, dadurch gekennzeichnet, daß man die Umsetzung in Gegenwart eines die Oxazolidinonringbildung fördernden Katalysators durchführt, der ausgewählt ist aus Katalysatoren auf der Basis tertiärer Amine, Katalysatoren in Form von organometallischen Verbindungen oder Katalysatoren in Form von anorganischen Salzen.

**6.** Verfahren nach Anspruch 5, dadurch gekennzeichnet, daß der Katalysator ausgewählt ist aus Benzyldimethylamin, 2,4,6-Tris(dimethylaminomethyl)phenol, Tetraethylammoniumbromid, Dioctylzinnmerkaptid, Aluminumtriisopropylat, Aluminiumtrichlorid, Zinkdichlorid oder Eisentrichlorid.

**7.** Verfahren nach einem der Ansprüche 1 bis 6, dadurch gekennzeichnet, daß der Reaktionsmischung zusätzlich Stabilisatoren und/oder Füllstoffe einverleibt werden.

**8.** Verfahren nach einem der Ansprüche 1 bis 7, dadurch gekennzeichnet, daß man eine erste Mischung (Komponente A) aus der wäßrigen Alkalisilikatlösung und dem Epoxidharz herstellt und diese zur Bereitung der Reaktionsmischung mit einer zweiten Mischung (Komponente B) vermischt, die das Polyisocyanat sowie gegebenenfalls den Katalysator enthält.

**9.** Verfahren nach einem der Ansprüche 1 bis 7, dadurch gekennzeichnet, daß man zur Bereitung der Reaktionsmischung eine erste Komponente (Komponente A) aus der wäßrigen, gegebenenfalls einen Katalysator enthaltenden Alkalisilikatlösung mit einer zweiten Komponente (Komponente B) vermischt, die aus dem Polyisocyanat sowie einem völlig von HO-Gruppen freien Epoxidharz besteht, das man dadurch erhalten hat, daß man das Epoxidharz in einer Vorreaktion mit einem Monoisocyanat umgesetzt hat, wobei die eingesetzte Menge des Monoisocyanats der stöchiometrischen Menge der HO-Gruppen im Epoxidharz entspricht.

**10.** Verfahren nach einem der Ansprüche 1 bis 9, dadurch gekennzeichnet, daß man das Verfahren als Verfahren zur Gebirgsverfestigung durchführt, indem man die flüssige Reaktionsmischung in die Spalten und Hohlräume eines Gebirges injiziert und dort unter in situ-Bildung der Organomineralprodukte ausreagieren läßt.

## Claims

**1.** Process for preparing organo-mineral products by reacting organic polyisocyanates in the presence of aqueous alkali silicate solutions,
characterized in that the reaction is carried out by using a reaction mixture containing as a further reactant an epoxy resin which reacts under the conditions of the reaction with the polyisocyanate or an intermediate formed therefrom in the reaction mixture, to form organic polymeric structures containing oxazolidinone rings as structural elements, wherein

- the polyisocyanates are selected from chemically pure polyisocyanates or polyisocyanates of technical grade, from mixtures of any such polyisocyanates with organic monoisocyanates, and from prepolymers thereof still containing reactive NCO groups;
- the aqueous alkali silicate solution contains a dissolved solid-matter content in the range from 10 to 60 % by weight and a $Me_2O$ content of 0.5 to 20 % by weight, and
- the epoxy resin used has a content of functional epoxy groups of 200 to 8000 mmol/kg epoxy resin
- and that the reactants polyisocyanate, aqueous alkali silicate solution and epoxy resin are used in such amount of substance ratios that the following relationship is fulfilled:

$x(Me_2O) + y($ 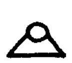 $) + (2x + y)(NCO) \longrightarrow$ organo-mineral products

where
$x(Me_2O)$ is the amount of substance in mol of sodium oxide and/or potassium oxide in the alkali

silicate component,
y(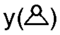) is the amount of substance in mol of the epoxy groups in the epoxy resin component,
(2x + y)(NCO) is the amount of substance of the NCO groups in the polyisocyanate component,
and where
Me stands for Na and/or K and x and y are positive numbers expressing the respective molar amounts, which numbers have a tolerance width which allows for the normal quality variations in the individual components if these are used as commercial products of technical grade,
and where
the epoxy resin component is used in an amount which is from 0.01 to 60% by weight, based on the weight of the alkali silicate solution.

**2.** Process in accordance with claim 1, characterized in that the organo-mineral products are prepared in the form of solid, unfoamed products.

**3.** Process according to claim 1, characterized in that a polyisocyanate is used whose content of NCO groups is in the range of from 0.238 to 1.190 mol per 100 g of polyisocyanate and that an aqueous alkali silicate solution is used which is such that the content of $Me_2O$ is in the range from 0.081 to 0.323 mol per 100 g of alkali silicate solution.

**4.** Process according to any one of claims 1 to 3, characterized in that the content of free NCO groups in the polyisocyanate component is in the range of from 10 to 50 % by weight, preferably from 25 to 35 % by weight.

**5.** Process according to any one of the preceding claims, characterized in that the reaction is carried out in the presence of a catalyst promoting the oxazolidinone formation, said catalyst being selected from catalysts based on tertiary amines, catalysts in the form of organometallic compounds or catalysts in the form of inorganic salts.

**6.** Process according to claim 5, characterized in that the catalyst is selected from benzyldimethylamine, 2,4,6-tris(dimethylaminomethyl)phenol, tetraethylammonium bromide, dioctyltin mercaptide, aluminium triisopropylate, aluminium trichloride, zinc dichloride and iron trichloride.

**7.** Process according to any one of claims 1 to 6, characterized in that into the reaction mixture there are further incorporated stabilizers and/or fillers.

**8.** Process according to any one of claims 1 to 7, characterized in that the aqueous alkali silicate solution and the epoxy resin are mixed to form a first mixture (component A), and that, in order to prepare the final reaction mixture, said first mixture is subsequently mixed with a second mixture (component B) comprising the polyisocyanate and, optionally, the catalyst.

**9.** Process according to any one of claims 1 to 7, characterized in that in order to prepare the final reaction mixture, a first component (component A) comprising the aqueous alkali silicate solution, optionally containing the catalyst, is mixed with a second component (component B) consisting of the polyisocyanate and an epoxy resin, said epoxy resin being an epoxy resin being completely free of OH groups and being obtained by reacting the epoxy resin in a preceding reaction with a monoisocyanate, in which preceding reaction the monoisocyanate is used in an amount which corresponds to the stoichiometric amount of the OH groups in the epoxy resin.

**10.** Process according to any one of claims 1 to 9, characterized in that the process is conducted as a process for stratum consolidation by injecting the liquid reaction mixture into the crevices and cavities of a stratum and allowing it to there react with in situ formation of organo-mineral products.

**Revendications**

**1.** Procédé de préparation de produits organo-minéraux par conversion de poly-isocyanates organiques, en présence de solutions aqueuses de silicates alcalins,
caractérisé en ce que l'on effectue la conversion en utilisant un mélange de réaction qui contient comme autre partenaire de réaction une résine époxy qui, dans les conditions de conversion, réagit

avec le polyisocyanate ou un composé intermédiaire formé à partir de celui-ci dans le mélange de réaction, avec formation de squelettes polymères organiques contenant des structures cycliques d'oxazolidinone, tandis que:

- les polyisocyanates sont choisis parmi des polyisocyanates chimiquement purs ou techniques, des mélanges de tels polyisocyanates avec des monoisocyanates organiques et des prépolymères de ceux-ci qui présentent encore des radicaux NCO réactifs;
- la solution aqueuse de silicate alcalin présente une teneur en solides solubilisés située dans la plage de 10 à 60% en poids et une teneur en $Me_2O$ de 5,0 à 20% en poids, et
- la résine époxy utilisée présente une teneur en radicaux époxy fonctionnels de 200 à 8000 mmol/kg de résine époxy,
- et en ce qu'on utilise les partenaires de réaction polyisocyanate, solution aqueuse de silicate alcalin et résine époxy dans des rapports massiques tels que soit vérifiée l'équation ci-dessous:

$$x(Me_2O) + y(\triangle) + (2x + y)(NCO) \rightarrow \text{produits organo-minéraux}$$

où $x(Me_2O)$ est le nombre de modes d'oxyde de sodium et/ou de potassium dans de silicate alcalin utilisé,

$y(\triangle)$ est de nombre de modes de radicaux époxy dans la résine époxy utilisée,

$(2x + y)(NCO)$ est la quantité de radicaux -NCO dans de polyisocyanate utilisé, et où

Me représente Na et/ou K, et x et y sont des nombres positifs représentant des quantités modaires relatives, qui représente une plage de tolérance qui tient compte des variations habituelles de qualité des partenaires de réaction individuels lorsque ceux-ci sont utilisés sous la forme de produits techniques du commerce,

et la résine époxy est utilisée à une quantité qui fait de 0,01 à 60% en poids, calculés sur le poids de la solution de silicate alcalin utilisée.

**2.** Procédé selon la revendication 1, caractérisé en ce que les produits organo-minéraux sont fabriqués sous la forme de produits massifs non transformés en mousse.

**3.** Procédé selon la revendication 1, caractérisé en ce que l'on utilise un polyisocyanate dont la teneur en radicaux NCO se situe dans la plage de 0,238 à 1,190 moles pour 100 g de polyisocyanate, et en ce que l'on utilise une solution aqueuse de silicate alcalin telle que la teneur en $Me_2O$ se situe dans la plage de 0,081 à 0,323 mole pour 100 g de solution de silicate alcalin.

**4.** Procedé selon l'une des revendications 1 à 3, caractérisé en ce que la teneur en radicaux NCO libres dans le polyisocyanate utilisé se situe dans la plage de 10 à 50% en poids, et de préférence de 25 à 35% en poids.

**5.** Procédé selon l'une des revendications précédentes, caractérisé en ce que l'on effectue la conversion en présence d'un catalyseur favorisant la formation de cycles d'oxazolidinone, et qui est sélectionné parmi des catalyseurs à base d'amines tertiaires, des catalyseurs présentant la forme de composés organométalliques ou de catalyseurs présentant le forme de sels inorganiques.

**6.** Procédé selon la revendication 5, caractérisé en ce que le catalyseur est sélectionné parmi la benzyldiméthylamine, le 2,4,6-tris(diméthylaminométhyl) phénol, le bromure de tétraéthylammonium, le mercaptide d'étain dioctyle, le tri-isopropylate d'aluminium, le trichlorure d'aluminium, le dichlorure de zinc ou le trichlorure de fer.

**7.** Procédé selon l'une des revendications 1 à 6, caractérisé en ce que l'on ajoute au mélange de réaction des stabilisants et/ou des charges.

**8.** Procédé selon l'une des revendications 1 à 7, caractérisé en ce que l'on prépare un premier mélange (composant A) à partir de la solution aqueuse de silicate d'alcalin et de la résine époxy, et que l'on mélange celui-ci à un second mélange (composant B) qui contient le polyisocyanate ainsi qu'éventuellement le catalyseur, pour préparer le mélange de réaction.

**9.** Procédé selon l'une des revendications 1 à 7, caractérisé en ce que, pour préparer le mélange de réaction, on mélange un premier composant (composant A), constitué de la solution aqueuse de silicate alcalin contenant éventuellement un catalyseur, à un second composant (composant B) qui est constitué du polyisocyanate ainsi que d'une résine époxy complètement exempte de radicaux OH, que l'on a obtenue en ayant transformé la résine époxy avec un monoisocyanate au cours d'une réaction préalable, la quantité utilisée de monoisocyanate correspondant à la quantité stoechiométrique des radicaux OH dans la résine époxy.

**10.** Procédé selon l'une des revendications 1 à 9, caractérisé en ce que l'on conduit le procédé comme procédé de consolidation de massifs rocheux, le mélange de réaction liquide étant injecté dans les interstices et les creux d'un massif rocheux, et y réagissant avec formation in situ des produits organo-minéraux.

FIGUR

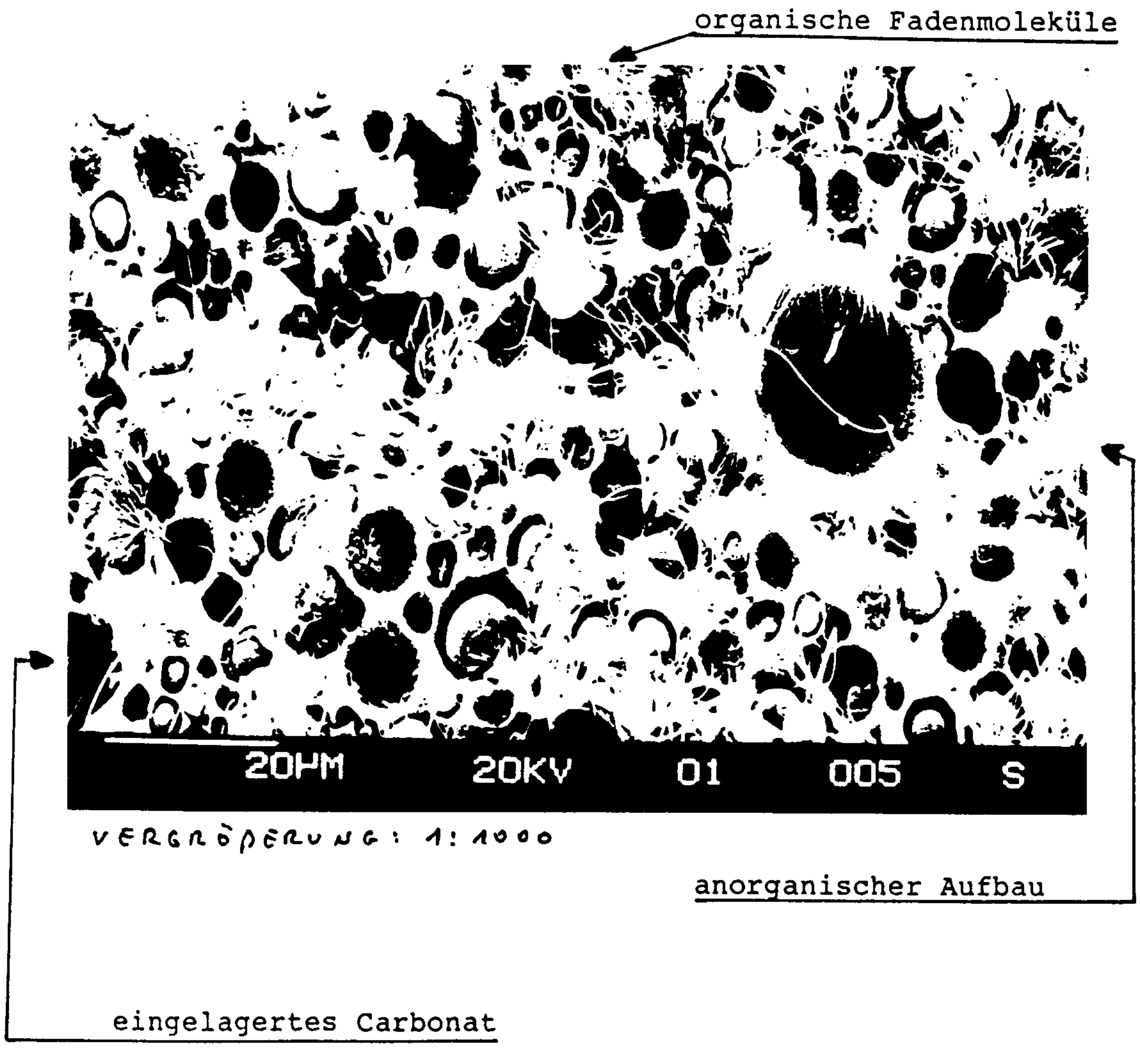
organische Fadenmoleküle
20μM 20KV 01 005 S
VERGRÖßERUNG: 1:1000
anorganischer Aufbau
eingelagertes Carbonat